# EUROPÄISCHE PATENTANMELDUNG

(11) **EP 2 006 639 A2**
(43) Veröffentlichungstag der Anmeldung: **24.12.2008**
(21) Anmeldenummer: 08104012.3
(22) Anmeldetag: 19.05.2008
(51) Int. Cl.: G01D 5/14

(54) **Sensoranordnung**

(30) Priorität: 21.06.2007 DE 102007028482
(71) Anmelder: ROBERT BOSCH GMBH, 70442 Stuttgart (DE)
(72) Erfinder: Noltemeyer, Ralf, 73249, Wernau (DE); Behrens, Holger, 71717, Beilstein (DE)

(57) **Zusammenfassung**

Es wird eine Sensoranordnung vorgeschlagen, umfassend zumindest ein Sensorelement (26, 34), welches auf zumindest einer Leiterplatte (30) angeordnet ist, zumindest ein Magnetfluss-Sammelelement (22, 24), das einen magnetischer Fluss erfasst, gekennzeichnet durch zumindest ein Flussleitelement (28, 32), welches den magnetischen Fluss des Magnetfluss-Sammelelements (24) dem Sensorelement (26, 34) zuführt, indem es vorzugsweise federnd gegen die Unterseite der Leiterplatte (30) drückt.

## Beschreibung

### Stand der Technik

Die Erfindung betrifft eine Sensoranordnung nach dem Oberbegriff des unabhängigen Anspruchs.

Solche Sensoranordnungen sind beispielsweise bekannt aus der DE 10 2005 031 086 A1. Zur Erfassung eines Differenzwinkels ist dort mindestens ein magnetempfindliches Sensorelement vorgesehen, das die Magnetfeldinformation eines Magnetkreises, bestehend aus einem Magnetpolrad und zwei relativ zueinander verdrehbarer ferromagnetischer Fluxringe mit Zähnen, auswertet. Die Zähne verlaufen in radialer Richtung zum radialen Abgriff des Magnetfelds des Magnetpolrads.

Es ist Aufgabe der vorliegenden Erfindung, eine einfach zu fertigende Sensoranordnung vorzusehen, die sich zudem durch hohe Signalempfindlichkeit auszeichnet. Diese Aufgabe wird gelöst durch die Merkmale des unabhängigen Anspruchs.

### Offenbarung der Erfindung

Die erfindungsgemäße Vorrichtung nach den Merkmalen des unabhängigen Anspruchs hat demgegenüber den Vorteil, dass durch den gewählten Aufbau der Flussleitelemente Sensorelemente verwendet werden können, welche in sogenannter SMD (Surface-Mounted-Device)-Technik auf einer Leiterplatte angeordnet werden können. Dadurch verringert sich der Herstellaufwand. Weiterhin lässt sich durch die spezielle Ausprägung des Flussleitelements ein minimaler Luftspalt über dem Sensorelement einstellen, unabhängig von den Fertigungstoleranzen des Sensorelements, der Magnetfluss-Sammelelemente und der Leiterplatte. Dank minimalem Luftspalt lässt sich eine hohe Empfindlichkeit der Sensoranordnung erzielen.

In einer zweckmäßigen Weiterbildung ist das Flussleitelement elastisch ausgeführt. Durch eine entsprechende Vorspannung drückt es das Sensorelement von unten hin zum Sammelelement. Dadurch wird der sich einstellende Luftspalt minimiert. Somit kann das Flussleitelement zwei Funktionen übernehmen, nämlich zur Luftspaltminimierung beitragen, zum anderen jedoch kann es den magnetischen Fluss des anderen Sammelelements dem Sensorelement zuführen.

In einer zweckmäßigen Weiterbildung ist eine Ausnehmung der Leiterplatte vorgesehen zur Aufnahme des Flussleitelements. Somit lässt sich eine definierte Montageposition des Flussleitelements gegenüber der mit dem Sensorelement versehenen Leiterplatte erreichen. Dies vereinfacht zum einen den Montageprozess. Zum anderen ist die Ausnehmung in unmittelbarer Nähe zum Sensorelement angeordnet, so dass der magnetische Fluss dem Sensorelement an geeigneter Stelle zugeführt werden kann.

In einer zweckmäßigen Weiterbildung ist vorgesehen, dass das Flussleitelement mit zumindest einem abgekröpften Ende versehen ist. Dadurch lässt sich in besonders einfacher Art und Weise eine Federwirkung erreichen, die zur Minimierung des Luftspalts beiträgt.

In einer zweckmäßigen Weiterbildung sind zwei Flussleitelemente vorgesehen, die jeweils vom anderen Sammelelement den magnetischen Fluss zwei Sensorelementen zuführen. Dadurch kann eine redundante Signalauswertung gewährleistet werden.

Weitere zweckmäßige Weiterbildungen ergeben sich aus weiteren abhängigen Ansprüchen und aus der Beschreibung.

Ein Ausführungsbeispiel der Sensoranordnung ist in der Zeichnung dargestellt und wird nachfolgend näher erläutert.

Es zeigen:
die Figur 1 eine perspektivische Darstellung der Sensoranordnung,
die Figur 2 einen Schnitt durch Magnetfluss-Sammelelement mit weiteren Komponenten der Sensoranordnung,
die Figur 3 eine Draufsicht auf die Leiterplatte mit Magnetfluss-Sammelelementen.

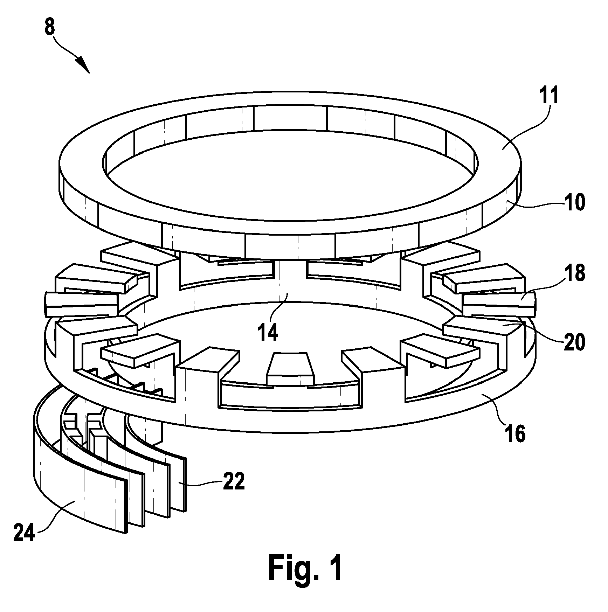

In Figur 1 sind die Komponenten einer Sensoranordnung 8 gezeigt. Ein Magnetpolrad 10 und ein Magnetfluss-Rückschlusselement 11 sind mit einer nicht dargestellten ersten Welle verbunden. Eine zweite Welle steht mit einem ersten Fluxring 14 und zweiten Fluxring 16 in Verbindung. Der erste Fluxring 14 ist auf einem inneren Radius angeordnet und wird von einem zweiten Fluxring 16, der auf einem äußeren Radius angeordnet ist, umgeben. Ausgehend von dem ersten Fluxring 14 sind in regelmäßigen Abständen in Umfangsrichtung erste Zähne 18 ausgebildet, die sich in radialer Richtung vom Durchmesser des ersten Fluxringes 14 ausgehend nach außen hin erstrecken. Auch von dem zweiten Fluxring 16 gehen in regelmäßigen Abständen zweite Zähne 20 aus, die ebenfalls in radialer Richtung orientiert sind. Die zweiten Zähne 20 weisen denselben axialen Abstand zu dem Magnetpolrad 10 auf wie die ersten Zähne 18. Die Abstände zwischen den Zähnen 18, 20 sind so gewählt, dass erste Zähne 18 und zweite Zähne 20 ineinander greifen. Der Abstand zwischen erstem Zahn 18 und benachbarten zweiten Zahn 20 ist so gewählt, dass der im Wesentlichen mit der Geometrie der Magnete des Magnetpolrads 10 übereinstimmt, d. h. beispielsweise mit dem Abstand von der Mitte eines Nordpolmagnetsegment zu der Mitte des benachbarten Südpolmagnetsegments. Ein erstes Magnetfluss-Sammelelement 22 ist an die Kontur des ersten Fluxrings 14 angepasst und greift den magnetischen Fluss des ersten Fluxrings 14 ab. Ein zweites Magnetfluss-Sammelelement 24 greift den Magnetfluss des zweiten Fluxrings 16 in entsprechender Weise ab. Beide Magnetfluss-Sammelelemente 22, 24 sind kreissegmentförmig ausgebildet, d. h. im Wesentlichen ringförmig wie in der Figur 1 gezeigt.

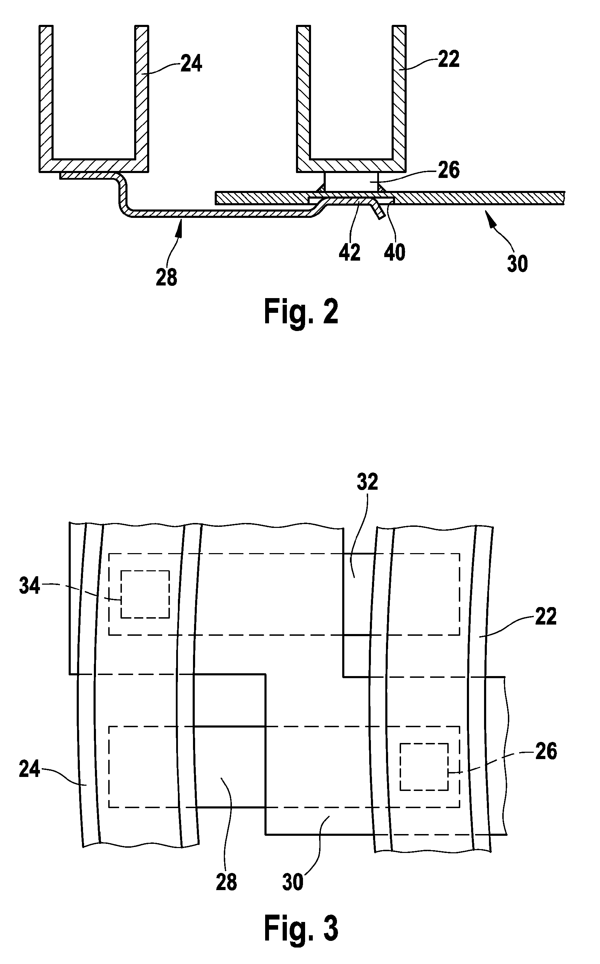

Der Figur 2 lässt sich entnehmen, dass die Magnetfluss-Sammelelemente 22, 24 einen im Wesentlichen u-förmigen Querschnitt aufweisen. Sie umschließen die in Figur 2 nicht dargestellten Fluxringe 14, 16. An der Unterseite des ersten Magnetfluss-Sammelelements 22 ist ein als integrierte Schaltung ausgeführtes Sensorelement 26 angeordnet, welches auf einer Leiterplatte 30 aufgebracht ist. Die Leiterplatte 30 besitzt auf der dem Sensorelement 26 gegenüberliegenden Seite eine Ausnehmung 40. In diese Ausnehmung 40 greift das abgekröpfte Ende 42 eines ersten Flussleitelements 28 ein. Das erste Flussleitelement 28 ist mit dem zweiten Magnetfluss-Sammelelement 24 verbunden und leitet den magnetischen Fluss des zweiten Fluxrings 16, gesammelt durch das zweite Magnetfluss-Sammelelement 24, an das erste Sensorelement 26 weiter.

Figur 3 lässt sich entnehmen, dass neben dem ersten Flussleitelement 28 nun auch ein zweites Flussleitelement 32 vorgesehen ist, welches an der Unterseite des ersten Magnetfluss-Sammelelements 22 angeordnet ist und - in entsprechender Weise wie das erste Flussleitelement 28 - den magnetischen Fluss einem zweiten Sensorelement 34 über die Unterseite der Leiterplatte 30, auf dem das zweite Sensorelement 34 montiert ist, zuführt. Das zweite Sensorelement 34 befindet sich unmittelbar an der Unterseite des zweiten Sammelelements 24. Da die Leiterplatte 30 lediglich der Anordnung und Signalführung/Verarbeitung der jeweiligen Sensorelemente 26, 34 dient, kann diese eine im Wesentlichen eine z-förmige Struktur aufweisen wie in Figur 3 ersichtlich.

Die in der Zeichnung dargestellte Sensoranordnung arbeitet wie folgt. Wird zwischen zwei nicht dargestellten Wellen ein Drehmoment erzeugt, so tordiert ein Torsionsstab. Dadurch entsteht eine Winkeldifferenz zwischen dem Magnetpolrad 10 und den Fluxringen 14, 16. Durch diese Winkeldifferenz wird eine magnetische Feldstärkeänderung im Bereich der Sensorelemente 26, 34 erzeugt, welches in ein vom Drehmoment abhängiges elektrisches Signal umgewandelt wird.

Magnetfluss-Sammelelemente 22, 24 sind gegenüber den entsprechenden Fluxringen 14, 16 ortsfest positioniert, d. h. die Fluxringe 14, 16 können sich um die Drehachse frei drehen, ohne dass die örtlichen festen Magnetfluss-Sammelelemente 22, 24 berührt werden.

Die Flussleitelemente 28, 32 dienen der gezielten Zuleitung des magnetischen Flusses der jeweiligen Magnetfluss-Sammelelemente 22, 24 zu den jeweiligen Sensorelementen 26, 34. So wird der von dem zweiten Fluxring 16 erfasste magnetische Fluss durch das zweite Magnetfluss-Sammelelement 24 gesammelt und aufgrund der Verbindung zwischen mit dem ersten Flussleitelement 28 an die Unterseite der Leiterplatte 30 geführt. Das abgekröpfte Ende 42 des ersten Flussleitelements 28 befindet sich in der Ausnehmung 40 auf der Unterseite der Leiterplatte 30. Die Ausnehmung 40 ist genau unterhalb des ersten Sensorelements 26 angeordnet. Denn das erste Sensorelement 26 erfasst sowohl den magnetischen Fluss, der über das erste Flussleitelement 28 zugeführt wird wie auch den unmittelbar von dem ersten Magnetflusssammelelement 22 erfassten magnetischen Fluss. Beide magnetischen Flüsse werden erfasst und zur Ermittlung des Differenzwinkels ausgewertet.

Die Flussleitelemente 28, 32 sind vorzugsweise aus elastischem Material, wie beispielsweise Blech, ausgebildet. Weiterhin sind die Flussleitelemente 28, 32 federnd ausgeführt, so dass sie gegen die Unterseite der Leiterplatte 30 drücken. Dadurch können Toleranzen im Luftspalt ausgeglichen werden. Weiterhin wird dadurch auch der Luftspalt zwischen Magnetfluss-Sammelelementen 22, 24, Sensorelementen 26, 34 und Flussleitelementen 28, 32 minimiert. Dank der federnden Wirkung der Flussleitelemente 28, 32 erleichtert sich auch die Montage der Leiterplatte 30. Dies erfolgt durch leichtes Anheben der beiden Flussleitelemente 28, 32 und Einschieben der Leiterplatte 30.

Die Sensorelemente 26, 34 sind Bestandteil einer integrierten Schaltung. Diese Sensorelemente 26, 34 müssen zur Signalverarbeitung mit der Leiterplatte 30 verbunden sein. Bei der beschriebenen Sensoranordnung kann nun das Sensorelement 26, 34 vorzugsweise mittels SMD-Prozess auf die Leiterplatte 30 angelötet werden.

Die beschriebene Sensoranordnung eignet sich zur Zuführung des magnetischen Flusses zu einem Sensorelement 26. Bei der in Figur 3 dargestellten Sensoranordnung sind nun zwei Sensorelemente 26, 34 vorgesehen zur redundanten Signalauswertung. Aus Montagegründen eignet es sich hierbei, die jeweiligen Sensorelemente 26, 34 jeweils unterhalb der gegenüberliegenden Sammelelemente 22, 24 anzuordnen. Grundsätzlich könnte es jedoch auch möglich sein, die Sensorelemente unter demselben Magnetfluss-Sammelelement 22, 24 zu positionieren und über die oder nur ein einziges Flussleitelement 28, 32 den Fluss vom jeweils anderen Magnetfluss-Sammelelement 22, 24 den Sensorelementen 26, 34 zuzuführen. Die Sensorelemente 26, 34 sind auf einer einzigen Leiterplatte 30 angeordnet. Diese ist z-förmig ausgeführt zur leichteren Montage zwischen Magnetfluss-Sammelelemente 22, 24 und Flussleitelemente 28,32.

Die Sensoranordnung eignet sich für beliebige geometrische Formen der Magnetfluss-Sammelelemente 22, 24, ein u-förmiger Querschnitt ist nicht notwendiger Weise erforderlich. Außerdem können noch weitere Sensorelemente vorhanden sein. Auch Aufbau und/oder Anordnung der Fluxringe sowie die Orientierung der Finger (radial oder axial) lassen sich nach Belieben variieren.

Die Sensoranordnung eignet sich insbesondere zur Drehmoment- bzw. Drehwinkelerfassung bei Lenkungen für Kraftfahrzeuge.

## Patentansprüche

1. Sensoranordnung, umfassend zumindest ein Sensorelement (26, 34), welches auf zumindest einer Leiterplatte (30) angeordnet ist, sowie zumindest ein Magnetfluss-Sammelelement (22, 24), das einen magnetischer Fluss erfasst, **gekennzeichnet durch** zumindest ein Flussleitelement (28, 32), welches den magnetischen Fluss des Magnetfluss-Sammelelements (24) dem Sensorelement (26, 34) zuführt, indem es vorzugsweise federnd gegen die Unterseite der Leiterplatte (30) drückt.

2. Sensoranordnung nach Anspruch 1, **dadurch gekennzeichnet, dass** das Flussleitelement (28, 32) zumindest ein abgekröpftes Ende (41) aufweist.

3. Sensoranordnung nach einem der vorhergehenden Ansprüche, **dadurch gekennzeichnet, dass** die Leiterplatte (30) zumindest eine Ausnehmung (40) aufweist, in die das Flussleitelement (28, 32) eingreift.

4. Sensoranordnung nach einem der vorhergehenden Ansprüche, **dadurch gekennzeichnet, dass** das Sensorelement (26, 34) auf der der Ausnehmung (40) gegenüberliegenden Seite angeordnet ist.

5. Sensoranordnung nach einem der vorhergehenden Ansprüche, **dadurch gekennzeichnet, dass** das Flussleitelement (28, 32) das Sensorelement (26, 34) gegen ein Magnetfluss-Sammelelement (22, 24) drückt.

6. Sensoranordnung nach einem der vorhergehenden Ansprüche, **dadurch gekennzeichnet, dass** das Sensorelement (26, 34) als integrierte Schaltung ausgeführt ist.

7. Sensoranordnung nach einem der vorhergehenden Ansprüche, **dadurch gekennzeichnet, dass** das Sensorelement (26, 34) in SMD-Technik mit der Leiterplatte 30 verbunden ist.

8. Sensoranordnung nach einem der vorhergehenden Ansprüche, **dadurch gekennzeichnet, dass** das Flussleitelement (28, 32) aus elastischem Material, vorzugsweise Blech, ausgeführt ist.

9. Sensoranordnung nach einem der vorhergehenden Ansprüche, **dadurch gekennzeichnet, dass** ein weiteres Sensorelement (34) vorgesehen ist.

10. Sensoranordnung nach einem der vorhergehenden Ansprüche, **dadurch gekennzeichnet, dass** ein weiteres Flussleitelement (32) vorgesehen ist, welches dem weiteren Sensorelement (34) einen magnetischen Fluss zumindest eines weiteren Magnetfluss-Sammelelements (22, 24) zuführt.
